# EUROPEAN PATENT APPLICATION

(11) **EP 1 707 841 A1**
(43) Date of publication of application: **04.10.2006**
(21) Application number: 05020472.6
(22) Date of filing: 20.09.2005
(51) Int. Cl.: F16F 9/06, F16F 9/092, B62K 25/08

(54) **Front fork of motorcycle or the like**

(30) Priority: 30.03.2005 JP 2005099787
(71) Applicant: SHOWA CORPORATION, Gyoda-shi, Saitama (JP)
(72) Inventor: Eguchi, Munemitu c/o Showa Corporation, Fukuroi-shi Shizuoka (JP)
(74) Representative: Grünecker, Kinkeldey, Stockmair & Schwanhäusser Anwaltssozietät

(57) **Abstract**

A front fork is provided with a damper unit (23) constituted by a damper cylinder (21) attached to a wheel side tube (11) and a piston rod (22) attached to a vehicle body side tube (11), a gas chamber (D) sealed between an inner periphery of a bladder (140) provided within the damper cylinder (21) and a lid portion (100A) of the damper cylinder (21), and a valve body (162) for adjusting a pressure in the gas chamber (D) within the bladder (140), and is further provided with an annular relief valve (201) keeping a pressure in an oil chamber (C) within the damper cylinder (21) constant, and a valve opening pressure adjusting means (207) of the annular relief valve (201).

## Description

The present invention relates to a front fork of a motorcycle or the like.

In Japanese Patent No. 3402817 (patent document 1), there is disclosed an inverted type front fork in which an oil chamber within a damper cylinder 4 attached to an outer tube 1 in a vehicle body side is completely sealed by a seal member such as an oil seal, a packing, an O-ring or the like so as to prevent an oil mixed with bubbles in an outer portion of the damper cylinder from making its way into the damper cylinder. An outer periphery of the damper cylinder 4 is provided with a cylindrical elastic partition member 11 serving as a seal member that is fastened at its both ends. Further, in order to prevent a hydraulic pressure within the damper cylinder 4 from being increased due to an intrusion of the oil in the outer portion of the damper cylinder 4 attached to a piston rod 24 into the damper cylinder 4, a relief valve 17 for releasing a surplus working fluid making intrusion into the damper cylinder to the outer portion of the damper cylinder 4 is provided within a valve chamber 15 within a cap in an upper end of the outer tube 1.

In Japanese Patent Application Laid-open No. 10-132008 (patent document 2), there is disclosed an inverted type front fork in which a bladder 6 having an U-shaped vertical cross sectional shape is provided in an upper end portion of a cylinder 3 attached to a vehicle body side outer tube 1. A gas chamber R4 is provided within the bladder 6, and the gas chamber R4 is communicated with a reservoir chamber R1 in an outer periphery of the cylinder 3 via communication holes 71 and 72 of a backup member 7. Further, the bladder 6 is received in an inner peripheral side in an upper end portion of the cylinder 3, and is structured such that when pressure in the head side oil chambers R2 and R3 within the cylinder 3 becomes abnormally high, a gap is formed between a lip portion 63 of the bladder 6 and the cylinder 3, thereby releasing the high-pressured working fluid within the cylinder 3 to the reservoir chamber R1 in an outer side of the cylinder 3.

However, in the front fork of the patent document 1, an outer side surface of the cylindrical elastic partition member 11 faces to the gas chamber 32 in the outer side of the damper cylinder. In other words, a pressurizing force of the damper cylinder is dependent on a pressure of the gas chamber 32 in the outer side of the damper, and it is not possible to independently adjust the pressurizing force in the oil chamber of the damper cylinder. As a result, a damping force is lost in the oil chamber within the damper cylinder due to a cavitation, at a time when an extension and compression stroke of the front fork is switched, and there is a problem that a buffering property is deteriorated.

In the front fork of the patent document 2, since the gas chamber R4 within the bladder 6 is communicated with the reservoir chamber R1, the same problem as that of the patent document 1 is generated. Further, there is a problem that it is impossible to adjust a valve opening pressure of the relief valve constituted by a lip portion 63, until the bladder itself is replaced.

Further, the front forks of the patent document 1 and the patent document 2 are both disclosed as a front fork having an inverted structure in which the damper cylinder is arranged in a vehicle body side, and the surplus working fluid within the damper cylinder comes down to the oil chamber in the outer side of the damper cylinder in the lower portion through the gas chamber in the outer side of the damper cylinder in the upper portion. Accordingly, there is a problem that the air tends to be mixed into the working fluid.

In this case, if the pressurizing force in the gas chamber is adjusted, the pressure in the oil chamber within the damper cylinder is changed. For example, since the pressure in the oil chamber within the damper cylinder becomes higher by increasing the pressure in the gas chamber, the relief valve is opened even if an amount of the surplus working fluid making intrusion into the damper cylinder from the outer portion is small. In other words, a valve opening time of the relief valve is advanced. In this case, it is desirable to change a valve opening pressure in the relief valve returning the surplus working fluid within the damper cylinder to the oil chamber in the outer side of the damper unit.

However, none of the front forks disclosed in the patent document 1 and the patent document 2 are provided with an air valve or the like for adjusting the pressure in the gas chamber. Further, the front fork in the patent document 2 is not provided with a valve opening pressure adjusting means of the relief valve.

An object of the present invention is to provide a front fork which is independent from a gas chamber in an outer side of a damper unit, which is provided with a gas chamber capable of being adjusted in pressure, and which can adjust a valve opening pressure of a relief valve keeping a pressure within a damper cylinder constant.

In accordance with the present invention, there is provided a front fork of a motorcycle or the like comprising: a vehicle body side tube and a wheel side tube which are slidably fitted; a damper unit constituted by a damper cylinder attached to the wheel side tube and a piston rod attached to the vehicle body side tube; an oil chamber within the damper cylinder, an oil chamber in an outer side of the damper unit and a gas chamber in an upper portion of the outer side oil chamber; an oil seal provided in a direction of scraping off an oil within the damper cylinder between the damper cylinder and the piston rod; a gas chamber sealed between an inner periphery of a bladder provided within the damper cylinder and a lid portion of the damper cylinder; a valve body for adjusting a pressure in the gas chamber within the bladder; an annular relief valve slidably provided between a cylindrical case arranged in an outer periphery of the damper cylinder and the damper cylinder; an oil reservoir chamber in an outer side of the damper unit provided between an inner periphery of the cylindrical case and the annular relief valve, and communicating with the oil chamber within the damper cylinder; and a valve opening pressure adjusting means of the annular relief valve.

The present invention will be fully understood from the detailed description given below and from the accompanying drawings which should not be taken to be a limitation on the invention, but are for explanation and understanding only.
The drawings:
FIG. 1 is a general sectional view showing a front fork in accordance with an embodiment;
FIG. 2 is an enlarged sectional view of an upper portion of the front fork in FIG. 1;
FIG. 3 is an enlarged sectional view of an intermediate portion in FIG. 1;
FIG. 4 is an enlarged sectional view of a lower portion in FIG. 1;
FIG. 5 is a sectional view of a main portion in FIG. 3;
FIG. 6 is a partly enlarged view of FIG. 4;
FIG. 7 is a partly enlarged view of FIG. 4;
FIG. 8 is a sectional view of a lower portion of a damper unit in FIG. 4;
FIGS. 9A and 9B are schematic views for explaining an assembled state, in which FIG. 9A shows a bladder assembly, and FIG. 9B is a sectional view of a damping force adjusting mechanism of a partition member;
FIGS. 10A and 10B are schematic views for explaining an assembled state, in which FIG. 10A is a schematic view of an adjust rod and guide member assembly, and FIG. 10B is a schematic view of a compression side adjuster assembly;
FIG. 11 is a sectional view of a cylinder side attaching member;
FIGS. 12A and 12B show a tube side attaching member, in which FIG. 12A is a top view, and FIG. 12B is a longitudinal sectional view along a line B-B in FIG. 12A;
FIGS. 13A and 13B show a valve stopper, in which FIG. 13A is a top view, and FIG. 13B is a front view;
FIG. 14 is a sectional view of the compression side adjuster;
FIG. 15 is a sectional view of the bladder;
FIG. 16 is a sectional view of a hollow pipe;
FIG. 17 is a sectional view of a guide member; and
FIGS. 18A, 18B and 18C are characteristic graphs for explaining damping force characteristics of a blow valve in accordance with the present invention, in which FIG. 18A shows damping force characteristics of the blow valve, FIG. 18B shows damping force characteristics of a needle valve, and FIG. 18C shows damping force characteristics of a blow valve in which a shape of a leading end portion of the blow valve in accordance with the present invention is formed as a needle valve shape.

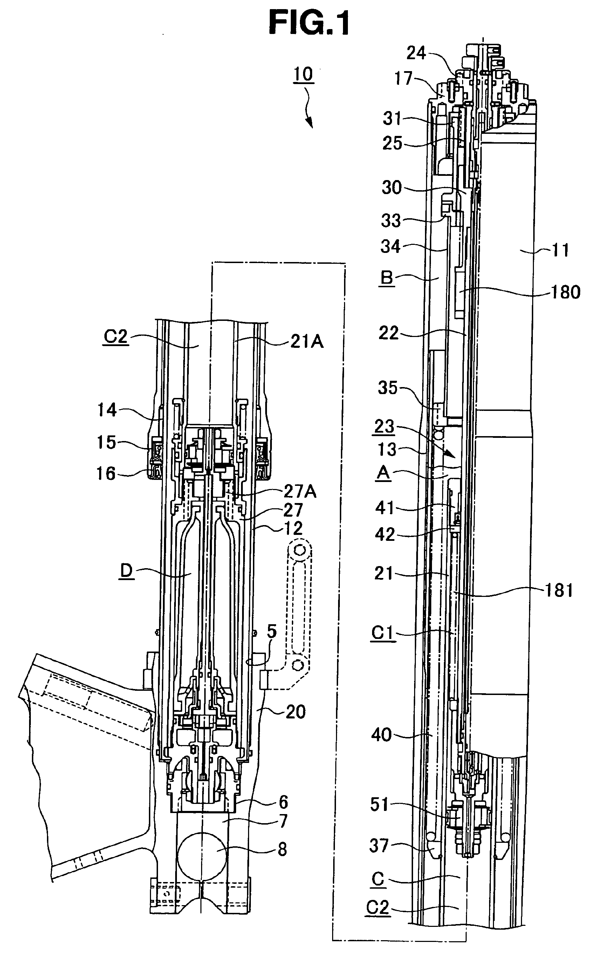

An inverted type front fork 10 (a hydraulic shock absorber) of a motorcycle or the like is structured, as shown in FIGS. 1 to 4, such that an inner tube 12 in a wheel side is slidably inserted to an outer tube 11 in a vehicle body side.

Bushes 13 and 14 guiding a sliding motion of the inner tube 12 are fitted to two positions in a lower end inner periphery and an upper end inner periphery of the outer tube 11. An oil seal 15 and a dust seal 16 are fitted to an inner peripheral portion of a lower end of the outer tube 11, and a cap 17 is screwed with an upper end portion of the outer tube 11 via an O-ring. A lower end portion of the inner tube 12 is screwed with an inner side of a hole 5 of an axle bracket 20 via an O-ring. The outer tube 11 is connected to the vehicle body side via upper and lower brackets (not shown), and the inner tube 12 is coupled with the wheel side via an axle (not shown).

A damper unit 23 constituted by a damper cylinder 21 and a hollow piston rod 22 is inside provided within the outer tube 11 and the inner tube 12 in an erecting state in which a lower end portion of the damper cylinder 21 is fixed to a bottom portion of the axle bracket 20 and an upper end portion of the hollow piston rod 22 is fixed to the cap 17 of the outer tube 11.

An oil chamber A is provided in an outer side of the damper unit 23, and a gas chamber B is provided in an upper portion of the oil chamber A.

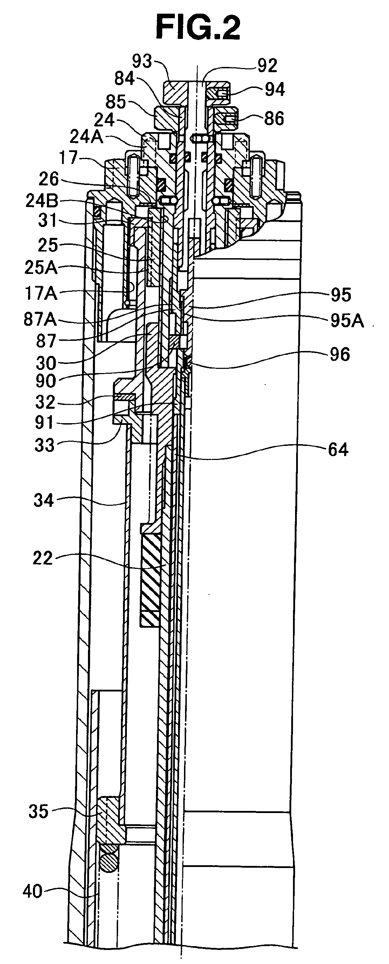

A spring adjuster 24 for adjusting a spring load is rotatably provided in an inner periphery of the cap 17, as shown in FIG. 2. The spring adjuster 24 is structured such that a large-diameter portion 24A is formed in an outer periphery of an upper end portion thereof, and a thread portion 24B is formed in an outer periphery of a lower end portion. A nut 25 is screwed with an outer periphery of the thread portion 24B so as to pinch an inner peripheral portion of the cap 17. A thrust washer 26 is interposed between the nut 25 and the cap 17, and the spring adjuster 24 is provided so as to be rotatable with respect to the cap 17. A groove 25A is formed in an axial direction in an outer periphery of the nut 25. An upper end portion of the hollow piston rod 22 is screwed with a lower end portion of the spring adjuster 24 via a joint nut 30.

A slider 31 is screwed with a thread portion 17A formed in an inner periphery of the cap 17, and an inner peripheral portion of the slider 31 is engaged with the groove 25A in the axial direction formed in the outer periphery of the nut 25. A joint collar 33 is provided in a lower end portion of the slider 31 so as to pinch a thrust washer 32 therebetween, and the joint collar 33 supports an upper end portion of a spring collar 34. An upper spring receiver 35 is provided in a lower end portion of the spring collar 34. A lower spring receiver 37 is supported by a stopper ring 36 fitted to the outer periphery of the damper cylinder 21, and a suspension spring 40 is interposed between the upper spring receiver 35 and the lower spring receiver 37, and pushes the outer tube 11 and the inner tube 12 in an extending direction. When rotating the spring adjuster 24, the slider 31 moves forward and backward along the inner periphery of the cap 17, and adjusts a spring load of the suspension spring 40 via the spring collar 34.

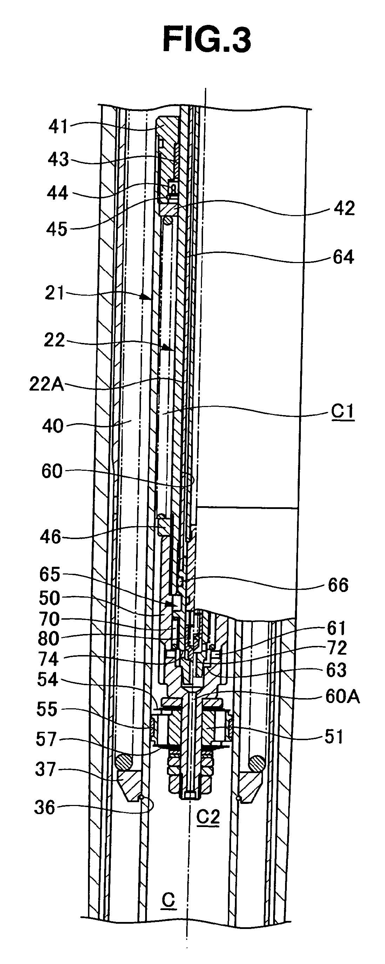

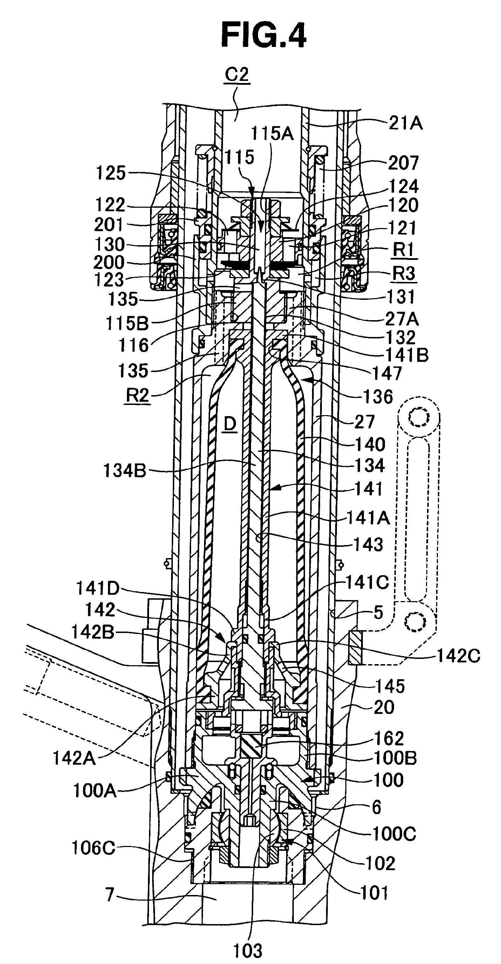

The damper cylinder 21 is constituted by a cylinder main body 21A and a sub tank 27 screwed with an inner periphery of a lower end portion of the cylinder main body 21A, as shown in FIGS. 3 and 4, and an oil chamber C is provided within the damper cylinder 21.

A rod guide 41 is screwed with an inner periphery of an opening portion in an upper end of the cylinder main body 21A via an O-ring, and is brought into contact with an annular washer 42 mounted in a step portion in an inner periphery of the opening portion of the cylinder main body 21A. A bush 43 is fixed to an inner periphery of the rod guide 41, and the hollow piston rod 22 is slidably inserted into the damper cylinder 21 via the bush 43. An oil seal 44 being in slidable contact with the outer periphery of the hollow piston rod 22 is provided in an inner periphery of the rod guide 41 adjacent to a lower portion of the bush 43, and the oil seal 44 is locked by a stopper ring 45. A lip of the oil seal 44 is provided in a direction of scraping off the working fluid within the damper cylinder 21 adhering to the outer periphery of the hollow piston rod 22 at a time when the hollow piston rod 22 gets out of the damper cylinder 21. As a result, when the hollow piston rod 22 moves into the damper cylinder 21, the working fluid in an outer side of the damper cylinder 21 attached to the outer periphery of the hollow piston rod 22 makes an intrusion into the damper cylinder 21. The O-ring in an outer periphery of the rod guide 41 and the oil seal 44 in the inner periphery of the rod guide 41 seal the oil chamber C within the damper cylinder 21.

A cylinder side attaching member 100 closing an opening portion of the sub tank 27 is provided in the opening portion in a lower end of the sub tank 27, as shown in FIGS. 4, 7 and 11. The cylinder side attaching member 100 is formed in a closed-end cylindrical shape, and is constituted by a lid portion 100A of the damper cylinder 21, a cylindrical attaching portion 100B in an inner side in an axial direction of the lid portion 100A, and an attaching shaft portion 100C in an outer side in the axial direction of the lid portion 100A. The cylindrical attaching portion 100B has a thread portion 100B1 in an outer periphery, and further has a thread portion 100B2 and an inner peripheral step portion 100B3 in an inner periphery of a leading end portion. The attaching shaft portion 100C is integrally formed with the lid portion 100A coaxially with the damper cylinder 21. The cylindrical attaching portion 100B of the cylinder side attaching member 100 is screwed with the inner periphery of the opening portion in the lower end of the sub tank 27 via an 0-ring.

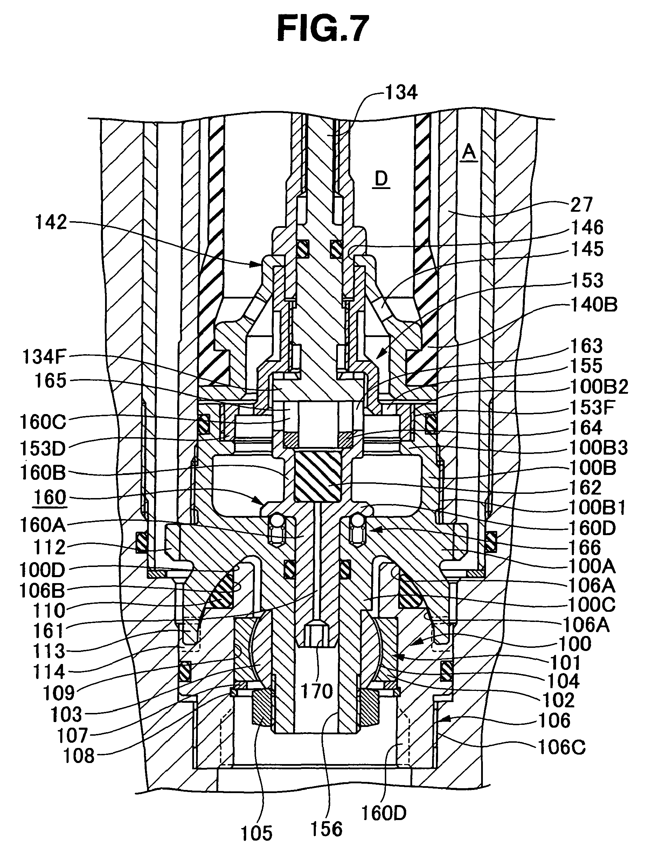

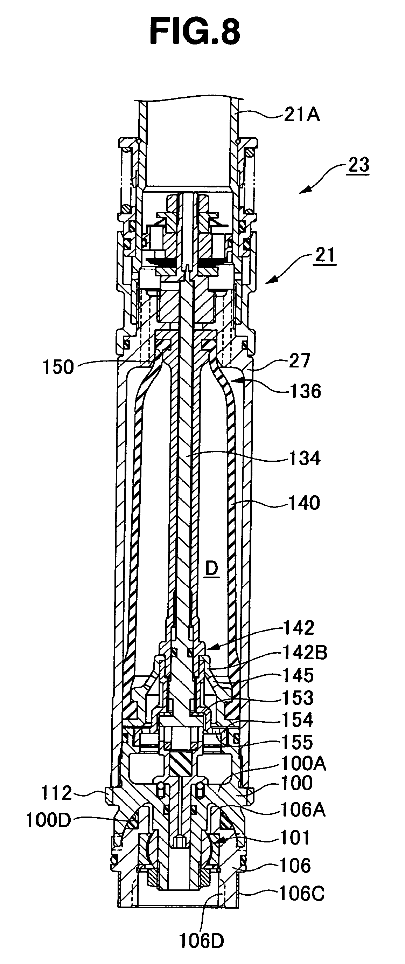

As shown in FIGS. 7 and 8, a cylindrical tube side attaching member 106 is attached to an outer periphery of the attaching shaft portion 100C via a spherical bearing 101. The spherical bearing 101 is constituted by an outer ring 102 and an inner ring 103 fitted to each other via a spherical portion, a convex spherical portion is formed in an outer periphery of the inner ring 103, and a concave spherical portion is formed in an inner periphery of the outer ring 102. A lubricating member 104 made of a synthetic resin or the like is provided between the spherical portions.

The spherical bearing 101 is structured such that the inner ring 103 is fitted to an outer periphery of a small-diameter portion formed in a leading end side of the attaching shaft portion 100C of the cylinder side attaching member 100, and is fixed by a nut 105. Further, the outer ring 102 of the spherical bearing 101 is fitted into a large-diameter attaching hole 109 formed in an inner periphery of the tube side attaching member 106, and is fixed in an axial direction via a washer 107 by a stopper ring 108.

A convex spherical portion 106A constituted by a convex spherical surface having a center of the spherical bearing 101 as a center is formed in a leading end surface of the cylindrical tube side attaching member 106. An annular groove 106B defined by a vertical surface in an axial direction and a horizontal surface orthogonal to the vertical surface is formed in the convex spherical portion 106A of the tube side attaching member 106, and an annular seal member constituted by an O-ring 110 is fitted into the annular groove 106B.

Further, the cylinder side attaching member 100 has a concave spherical portion 100D constituted by a concave spherical surface having the center of the spherical bearing 101 as a center in an outer side surface in the axial direction of the lid portion 100A. The tube side attaching member 106 is arranged in a facing manner in the axial direction in the cylinder side attaching member 100, and the concave spherical portion 100D of the cylinder side attaching member 100 faces to the convex spherical portion 106A of the tube side attaching member 106. The O-ring 110 fitted to the annular groove 106B of the convex spherical portion 106A of the tube side attaching member 106 is in slidable contact with the concave spherical portion 100D of the cylinder side attaching member 100, and seals the working fluid in the oil chamber A in the outer side of the damper unit 23 with respect to the external portion.

In this case, the convex spherical portion 106A in the leading end surface of the tube side attaching member 106 is not necessarily required, and it is sufficient that the 0-ring 110 fitted to the annular groove 106B in the leading end surface of the tube side attaching member 106 is in slidable contact with the concave spherical portion 100D of the cylinder side attaching member 100 over an oscillating range.

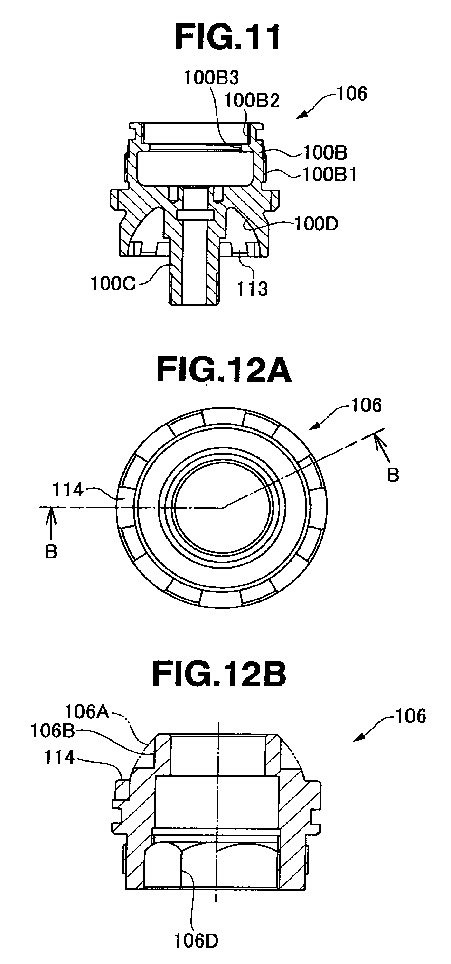

Eight engagement hooks 113 are circumferentially formed at a uniform interval in the leading end portion of the concave spherical portion 100D of the cylinder side attaching member 100, as shown in FIG. 11, and eight engagement grooves 114 engaging with the engagement hooks 113 of the cylinder side attaching member 100 in a rotational direction are formed at a uniform interval in the outer peripheral portion adjacent to the convex spherical portion 106A of the cylindrical tube side attaching member 106, as shown in FIG. 12. Heights and depths of the engagement hook 113 of the cylinder side attaching member 100 and the engagement groove 114 of the cylindrical tube side attaching member 106 are formed such that they can oscillate with each other in a rotational direction.

The cylinder side attaching member 100 of the damper unit 23 is provided so as to freely oscillate around the center of the spherical bearing 101 with respect to the cylindrical tube side attaching member 106, and is integrally rotated in the rotational direction.

A small-diameter thread portion 106C is formed in a lower portion in an outer periphery of the tube attaching member 106 via a step portion, and a groove 112 in an axial direction is formed at a uniform interval in a circumferential direction in the outer periphery of the cylinder side attaching member 100.

Further, as shown in FIG. 1, an attaching hole 6 of the damper cylinder 21 is formed in a bottom portion of an inner peripheral hole 5 of the axle bracket 20, and a through hole 7 in an axial direction is formed orthogonal to an axle hole 8 in a bottom portion of the attaching hole 6. The through hole 7 communicates the inner peripheral hole 5 of the axle bracket 20 with the outer portion.

The damper unit 23 is attached to the attaching hole 6 in the bottom portion of the axle bracket 20 via the thread portion 106C of the tube side attaching member 106, as shown in FIG. 8. In order to attach the damper unit 23 to the attaching hole 6 in the bottom portion of the axle bracket 20, the damper unit 23 is first inserted to the inner tube 12 from the opening portion in the upper portion of the inner tube 12, a cylindrical tool (not shown) is next inserted to the outer periphery of the damper unit 23, the tool is engaged with a groove 112 in an axial direction formed in the outer periphery of the cylinder side attaching member 100, and the cylinder side attaching member 100 is rotated. When rotating the cylinder side attaching member 100, the damper unit 23 is screwed into the attaching hole 6 of the axle bracket 20 via the cylindrical tube side attaching member 106. In the case of detaching the damper unit 23 from the axle bracket 20, the damper unit 23 is detached by rotating the cylindrical tube side attaching member 106 in a reverse direction. Since the damper unit 23 is attached to the axle bracket 20 via the spherical bearing 101, the damper unit 23 is freely oscillated in all the front, rear, left and right directions.

### (Damping Force Generating Mechanism of Piston)

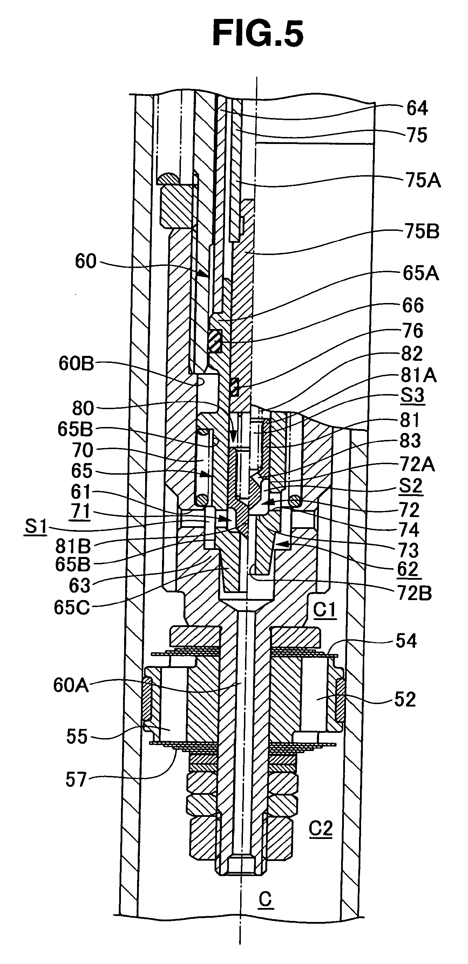

The hollow piston rod 22 is constituted by a hollow piston rod main body 22A, and a holder 50 screwed with an outer periphery of a leading end portion of the hollow piston rod main body 22A via a lock nut 46, as shown in FIGS. 3 and 5, and an outer diameter in a leading end side of the holder 50 is formed smaller than a base end side. A piston 51 is attached to an outer periphery in a leading end side of the holder 50. The piston 51 sections the oil chamber C within the damper cylinder 21 into a hollow piston rod side oil chamber C1 in which the hollow piston rod 22 is received, and a piston side oil chamber C2 in which the hollow piston rod 22 is not received.

A compression side oil path 52 and an extension side oil path 55 communicating the oil chambers C1 and C2 in both sides of the piston 51 are alternately formed on a circumference of the piston 51, as shown in FIG. 5. A compression side valve 54 is provided in an upper opening end of the compression side oil path 52, and an extension side valve 57 is provided in a lower opening end of the extension side oil path 55. The compression side oil path 52, the compression side valve 54, the extension side oil path 55 and the extension side valve 57 structure a damping force generating mechanism of the piston 51.

### (Damping Force Adjusting Mechanism of Piston)

The hollow piston rod 22 has a hollow hole 60 formed in an axial direction, and a lower end portion of the hollow hole 60 is open to the piston side oil chamber C2.

A small-diameter hollow hole 60A is formed with a portion of an inner periphery in a leading end side of the holder 50, and a large-diameter hollow hole 60B is formed with a portion of an inner periphery in a base end side of the holder 50. A horizontal hole 61 communicating the large-diameter hollow hole 60B within the holder 50 with the hollow piston rod side oil chamber C1 is formed in a side wall of the holder 50.

A first bypass oil path 62 constituted by the horizontal hole 61, the large-diameter hollow hole 60B and the small-diameter hollow hole 60A is formed within the holder 50 of the hollow piston rod 22 so as to be in parallel to the oil paths 52 and 55. A first valve seat 63 having an inner peripheral step portion is further formed within the large-diameter hollow hole 60B of the first bypass oil path 62.

A hollow first adjusting rod 64 is provided within the hollow hole 60 of the hollow piston rod 22 so as to be freely moved forward and backward in an axial direction, and a hollow needle valve 65 is fitted to a leading end portion of the first adjusting rod 64. The hollow needle valve 65 is constituted by a large-diameter portion 65A which is in slidable contact with the inner periphery of the hollow piston rod via an O-ring, a small outer diameter portion 65B which forms an annular gap S1 with respect to the large-diameter hollow hole 60B formed with a portion of an inner periphery of the holder, and a taper portion 65C in which a diameter of a leading end side is reduced via an inner peripheral step portion. The taper portion 65C in a leading end of the hollow needle valve 65 is provided so as to face to an inner periphery of the first valve seat 63 of the first bypass oil path 62, and adjusts an opening area between an outer periphery of the taper portion of the hollow needle valve 65 and the inner periphery of the first valve seat 63 so as to adjust an extension side damping force. A spring 70 is interposed between an outer periphery of the hollow needle valve 65 and a horizontal step portion formed above the horizontal hole 61 of the holder 50, and pushes the hollow needle valve 65 upward.

A second bypass oil path 71 is provided within the hollow needle valve 65 so as to be in parallel to the first bypass oil path 62. A hole 72 in an axial direction is formed within the hollow needle valve 65, and the hole 72 in the axial direction is communicated with the piston side oil chamber C2 side via the small-diameter hollow hole 60A in the leading end side of the holder. A horizontal hole 74 is formed in a side wall of the hollow needle valve 65, and the horizontal hole 74 is open to the annular gap S1 in the outer periphery of the small outer diameter portion of the hollow needle valve 65, and is communicated with the piston rod side oil chamber C1 via the horizontal hole 61 of the holder. The hole 72 in the axial direction is constituted by a large-diameter hole 72A in a base end side and a small-diameter hole 72B in a leading end side, and a second valve seat 73 is formed in a horizontal step portion between the large-diameter hole 72A and the small-diameter hole 72B. The second bypass path 71 constituted by the horizontal hole 74 and the hole 72 in the axial direction is formed within the hollow needle valve 65 so as to be in parallel to the first bypass oil path 62. The second bypass oil path 71 is in parallel to the oil paths 52 and 55 of the piston 51 in the same manner as the first bypass oil path 62.

A hollow second adjusting rod 75 is provided within the hollow first adjusting rod 64 so as to be freely moved forward and backward in an axial direction. The hollow second adjusting rod 75 is constituted by a second adjusting rod main body 75A and a rod-shaped plug body 75B fitted to an inner periphery of an opening portion in a leading end of the second adjusting rod main body 75A, and the plug body 75B closes the opening portion of the second adjusting rod main body 75A. An O-ring 76 is interposed between an outer periphery of the plug body 75B and an inner periphery of the hollow needle valve 65, and the O-ring 76 seals between the first adjusting rod 64 and the second adjusting rod 75.

A blow valve 80 is provided in a leading end of the second adjusting rod 75. The blow valve 80 is provided so as to face to the second valve seat 73 of the second bypass oil path 71, and adjusts a compression side damping force. The blow valve 80 is constituted by a poppet valve 81, and a spring 82 interposed between the poppet valve 81 and the plug body 75B of the second adjusting rod 75. The poppet valve 81 is constituted by a cylindrical guide portion 81A sliding within the hollow needle valve 65, and a needle valve portion 81B having a small outer diameter and integrally formed in a leading end side of the guide portion, and the small outer diameter needle valve portion 81B has a taper portion in which a diameter of a leading end is reduced. An outer periphery of the small-diameter needle valve portion 81B forms an annular gap S2 with respect to the large-diameter hole 72A of the hollow needle valve. The horizontal hole 74 of the hollow needle valve 65 is open to the annular gap S2. A pressure introduction hole 83 communicated with an oil chamber S3 at the back of the blow valve 80 is formed in a base portion of the small outer diameter needle valve portion 81B. The spring 82 pushes the poppet valve 81 to the second valve seat 73.

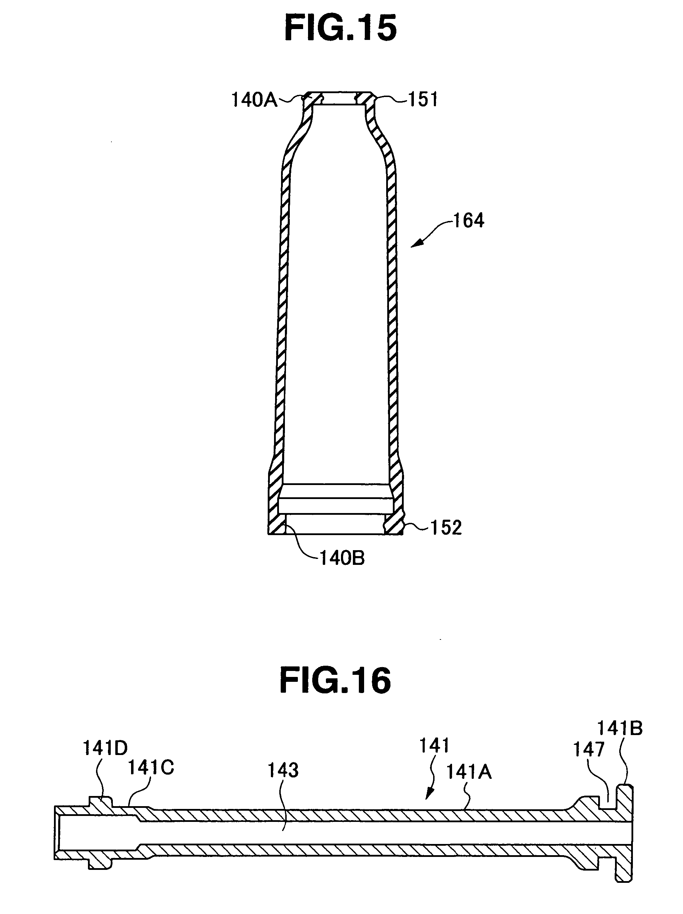

The second adjusting rod 75 moves forward and backward in the axial direction so as to adjust the spring load of the spring 82, and regulates a moving amount of the blow valve 80. FIG. 15A shows damping force characteristics of the blow valve, FIG. 15B shows damping force characteristics of the needle valve, and FIG. 15C shows damping force characteristics of the blow valve 80 in which the shape of the leading end portion of the blow valve 80 in accordance with the present invention is formed as a needle valve shape. An opening area largely changing after the valve is opened and corresponding to a defect of the blow valve is made hard to be changed by forming the shape of the leading end portion of the blow valve 80 as the needle valve shape, and a rapid increase of the opening area is prevented by regulating the moving amount of the blow valve 80.

### (Adjuster for Adjusting Damping Force of Piston)

A hollow first adjuster 84 moving the hollow first adjusting rod 64 forward and backward in the axial direction via the O-ring is rotatably provided in an inner periphery of the spring adjuster 24 in the upper end of the outer tube 11, as shown in FIG. 2. A first operation dial 85 is fixed to an outer end portion of the first adjuster 84 by a locking screw 86. A hollow first slider 87 is fitted to an outer periphery of a lower end portion of the first adjuster 84 with non-circular form engagement, and the first slider 87 is screwed with the inner periphery of the spring adjuster 24 via a thread portion 87A in an outer periphery. A lower end portion of the first slider 87 is brought into contact with a cylindrical joint collar 91 via an annular collar 90, and the joint collar 91 is brought into contact with a base end portion in an upper end side of the first adjusting rod 64. The annular collar 90 is provided so as to absorb an eccentricity between the first slider 87 and the joint collar 91. When rotating the first adjuster 84, the first slider 87 moves forward and backward in an axial direction while rotating, and moves the first adjusting rod 64 forward and backward in the axial direction via the joint collar 91. Further, the hollow needle valve 65 in the leading end portion of the first adjusting rod 64 adjusts the opening area between the hollow needle valve 65 and the first valve seat 63 so as to adjust an extension side damping force.

A second adjuster 92 is rotatably provided in an inner periphery of the first adjuster 84 via an 0-ring. The second adjuster 92 protrudes to an outer side in the axial direction from the first adjuster 84, and an operation dial 93 having a smaller diameter than the first operation dial 85 is fixed to an outer end portion of the second adjuster 92 by a locking screw 94. A lower end portion of the second adjuster 92 is fitted to the second slider 95 with non-circular form engagement, and the second slider 95 is screwed with an inner periphery of the first slider 87 via a thread portion 95A in an outer periphery. A lower end portion of the second slider 95 is formed in a convex spherical shape, and is brought into contact with a ball 96 freely rotatably provided in a base end portion in an upper end side of the second adjusting rod 75. The ball 96 absorbs an eccentricity between the second slider 95 and the second adjusting rod 75. When rotating the second adjuster 92, the second slider 95 moves forward and backward in an axial direction while rotating, and moves the second adjusting rod 75 forward and backward in the axial direction. Further, the second adjusting rod 75 adjusts the compression side damping force by adjusting the spring load of the spring 82 of the blow valve 80. In this case, at a time of rotating the second adjuster 92, the first adjuster 84 is in a fixed state.

### (Damping Force Generating Mechanism of Partition Member)

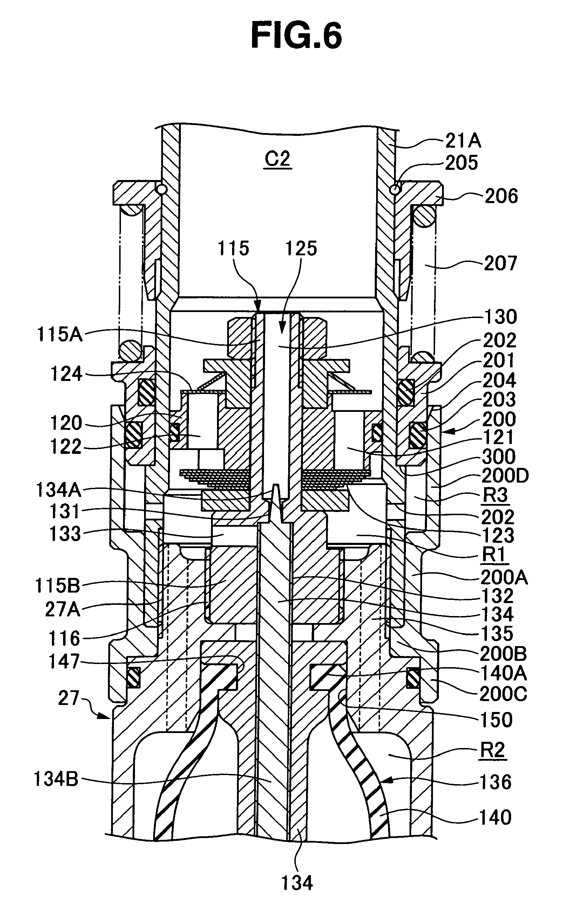

The cylindrical sub tank 27 having a thick top portion 27A in an axial direction is screwed with the inner periphery of the base end portion of the cylinder main body 21A, as shown in FIGS. 4 and 6. A holder 115 is provided in a rising manner in a top portion 27A of the sub tank 27. The holder 115 is constituted by a shaft portion 115A and a large-diameter base portion 115B, the base portion 115B of the holder 115 is screwed within an upper concave portion 116 formed in an upper side surface of the top portion 27A of the sub tank 27, and a partition wall member 120 having a compression side damping force generating mechanism is fitted to an outer periphery of the shaft portion 115A of the holder 115. An oil reservoir chamber R1 is defined in a lower portion of the partition member 120. A compression side oil path 121 and an extension side oil path 122 are alternately formed on a circumference of the partition member 120, a compression side valve 123 is provided in a lower opening end of the compression side oil path 121, and an extension side check valve 124 is provided in an upper opening end of the extension side oil path 122. The compression side oil path 121, the compression side valve 123, the extension side oil path 122 and the extension side check valve 124 construct a damping force generating mechanism of the partition member 120.

A bypass oil path 125 of the partition member 120 is formed within the holder 115 so as to be in parallel to the compression side oil path 121 and the extension side oil path 122 of the partition member 120. A closed-end vertical hole 130 open to the piston side oil chamber C2 is formed in a shaft portion 115A of the holder 115, an orifice hole 131 having a smaller diameter than the vertical hole 130 is formed in an axial direction in a bottom portion of the vertical hole 130, and a lower vertical hole 132 having a larger diameter than the orifice hole 131 is formed coaxially with the orifice hole 131 so as to pass through a bottom portion of a base end portion 115B of the holder 115. A horizontal hole 133 is formed in a leading end portion of the lower vertical hole 132 adjacent to the orifice hole 131, and the horizontal hole 133 is communicated with the oil reservoir chamber R1 in the lower portion of the partition member 120. The vertical hole 130 open to the piston side oil chamber C2, the orifice hole 131, the lower vertical hole 132 and the horizontal hole 133 construct the bypass oil path 125 of the partition member 120. An adjust rod 134 having a needle valve portion 134A formed in a leading end portion is inserted into the lower vertical hole 132 so as to freely move forward and backward, and adjusts an opening area of the orifice hole 131.

A plurality of through holes 135 in an axial direction are formed in an outer peripheral portion of the top portion 27A of the sub tank 27, and a sub tank interior oil reservoir chamber R2 communicated with the oil reservoir chamber R1 in the lower portion of the partition member 120 is formed within the sub tank 27. A bladder assembly 136 is provided in the sub tank interior oil reservoir chamber R2, as shown in FIG. 4. The bladder assembly 136 is constituted by a cylindrical bladder 140, a hollow pipe 141 fastening each of end portions of the cylindrical bladder 140 and a bladder stopper 142.

The hollow pipe 141 is constituted by a main body portion 141A having a hollow hole 143, an expanded portion 141B integrally formed in an outer periphery in a leading end portion of the main body portion 141A, and a base end portion 141C having a hollow hole of a larger diameter than a hollow hole 143 of the main body portion 141A, as shown in FIGS. 4, 9 and 16, has an annular groove 147 in an outer periphery of the expanded portion 141B, and has an annular stopper portion 141D integrally formed in an outer periphery of the base end portion 141C.

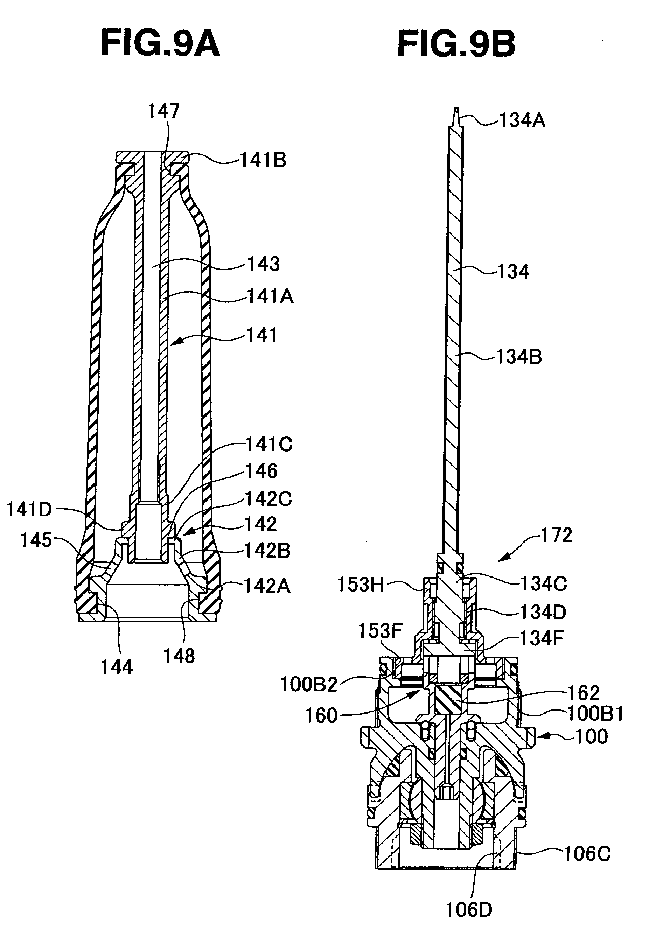

The bladder stopper 142, which is formed in a circular truncated cone shape in which a diameter is sequentially reduced to an inner side in an axial direction, as shown in FIG. 9A, is constituted by an outer peripheral base portion 142A, an inclined portion 142B in which a diameter is reduced to an inner side in an axial direction while being connected to the outer periphery, and an inner peripheral flange portion 142C. Said bladder stopper 142 has an annular ring 144 in an outer periphery of the base portion 142A, a plurality of communication holes 145 passing through the inclined portion 142B, and a center hole 146 in an axial direction in the inner peripheral flange portion 142C.

The bladder 140 is formed in a cylindrical shape in which inner and outer diameters are reduced toward a leading end side, as shown in FIG. 15, and has annular convex portions 140A and 140B respectively in an inner periphery of a leading end portion and an inner periphery of a base end portion, and has annular seal lips 151 and 152 respectively in an outer periphery of the leading end portion and an outer periphery of the base end portion.

The bladder assembly 136 mentioned above is assembled as described below.

As shown in FIG. 9A, the center hole 146 of the bladder stopper 142 is fitted to the outer periphery of the base end portion of the hollow pipe 141 in a state of setting the flange portion 142C in the inner periphery of the bladder stopper 142 to the leading end side.

Next, the bladder assembly 136 is completed by fastening the annular convex portion 140A in the inner periphery of the leading end portion of the bladder 140 into the annular groove 147 of the expanded portion 141B in the leading end side of the hollow pipe 141, and fastening the annular convex portion 140B in the inner periphery of the base end portion into the annular groove 148 of the bladder stopper 142.

A lower recess portion 150 is formed in a lower side surface of the top portion 27A of the sub tank 27, as shown in FIG. 8.

The bladder assembly 136 is assembled within the sub tank 27 by fitting the leading end portion of the bladder assembly 136 into the lower recess portion 150 of the sub tank 27, and fitting the base end portion of the bladder assembly 136 to the base end side inner periphery of the sub tank 27. An annular seal lip 151 in the outer periphery of the leading end portion of the bladder 140 is brought into close contact with an inner periphery of the lower recess portion 150 of the sub tank 27, and an annular seal lip 152 in the outer periphery of the base end portion of the bladder 140 is brought into close contact with the inner periphery of the sub tank 27, thereby achieving a seal effect with respect to the outer oil reservoir chamber R2 of the bladder 140.

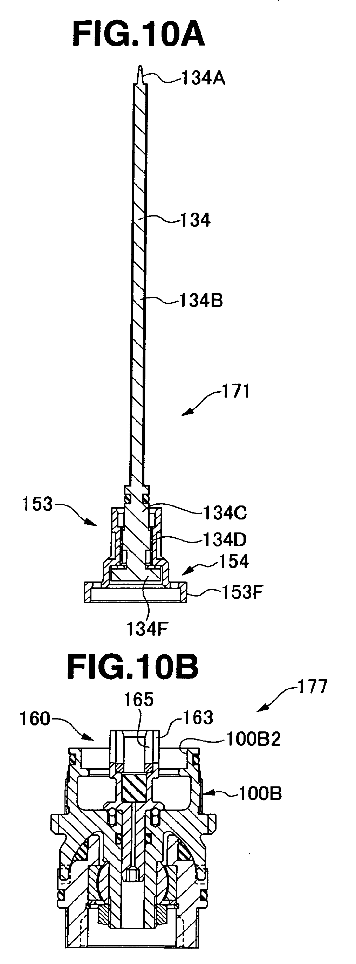

The rod-shaped adjust rod 134 is inserted into the hollow hole 143 of the hollow pipe 141 so as to freely move forward and backward. The adjust rod 134 is constituted by a rod-shaped main body portion 134B, a needle valve portion 134A integrally formed in a leading end portion of the main body portion 134B, a thread portion 134D formed in an outer periphery of a large-diameter portion 134C in a base end side, and a square rod-shaped engagement portion 134F integrally formed in a base end portion in a direction intersecting a center axis, as shown in FIG. 10A.

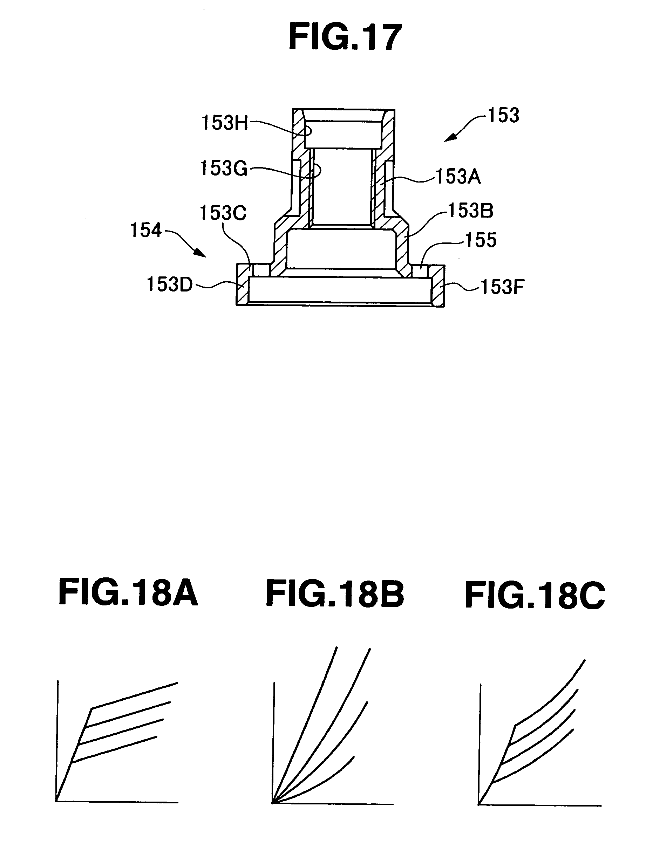

The guide member 153 is constituted by a cylindrical member having an expanded bed plate portion 154, as shown in FIG. 17, and the guide member 153 is constituted by a cylindrical main body portion 153A, a base end side large-diameter portion 153B in which inner and outer diameters are larger than the main body portion 153A, and an expanded bed table portion 154 comprising a flat portion 153C connected to the large-diameter portion 153B and a cylinder portion 153D in an outer peripheral edge of the flat portion 153C. An inner periphery of the main body portion 153A has a thread portion 153G and a leading end side expanded portion 153H, and an outer periphery of the main body portion 153A has a parallel flat portions for engaging a tool. A flat portion of the expanded bed table portion 154 has a plurality of communication holes 155 penetrating in an axial direction on a circumference, and the cylinder portion 153D has a thread portion 153F in an outer periphery.

The thread portion 134D in the outer periphery of the large-diameter portion of the adjust rod 134 is screwed with a thread portion 153G in the inner periphery of the main body portion 153A of the guide member 153. The square rod-shaped engagement portion 134F of the adjust rod 134 is received within the base end side large-diameter portion 153B of the guide member 153.

As shown in FIG. 8, the cylinder side attaching member 100 having the lid portion 100A closing the opening portion of the sub tank 27 is screwed with the inner periphery of the opening portion in the lower end of the sub tank 27 via an O-ring. A gas chamber D is sealed between the inner periphery of the bladder 140 and the cylinder side attaching member 100. The gas chamber D in the inner periphery of the bladder 140 is communicated via a plurality of communication holes 145 in the inclined portion 142B of the bladder stopper 142 and the communication hole 155 in the flat portion of the expanded bed plate portion 154 of the guide member 153.

### (Damping Force Adjusting Mechanism of Partition Member 120)

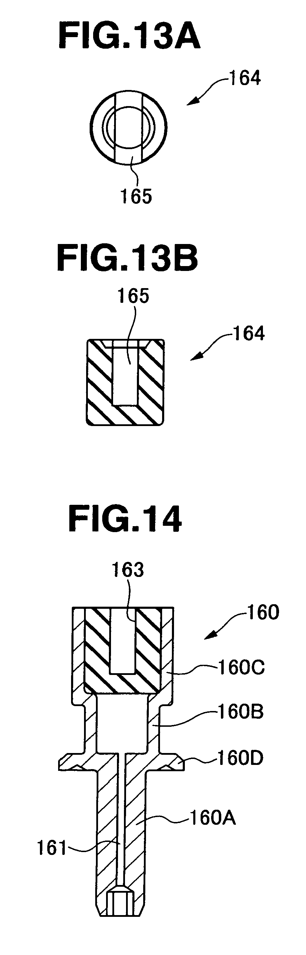

A center hole 156 penetrating in the axial direction is formed within the attaching shaft portion 100C of the cylinder side attaching member 100, as shown in FIG. 7. A compression side adjuster 160 for rotating the adjust rod 134 is rotatably provided in the center hole 156. The compression side adjuster 160 is constituted by a base end side shaft portion 160A, a closed-end cylinder portion 160B and an engagement portion 160C in a leading end portion of the cylinder portion 160B, as shown in FIG. 14. The shaft portion 160A has a through hole 161 in an axial direction open to a bottom portion of the cylinder portion 160B, and is fitted into the hollow hole 156 of the attaching shaft portion 100C via an O-ring. A cylindrical valve body 162 constituted by an elastic body such as a rubber or the like is pressure inserted to a bottom portion of the cylinder portion 160B. The engagement portion 160C has a notch 163 cut in a diametrical direction, and a cylindrical valve stopper 164 for preventing the valve body 162 such as the rubber or the like from coming off in the axial direction is pressure inserted to an inner periphery of the engagement portion 160C, as shown in FIG. 13. An inner diameter of the valve stopper 164 is formed smaller than an outer diameter of the valve body 162 as shown in FIG. 7, and prevents the valve body 162 from coming off in the axial direction. Further, a notch 165 having the same depth and width as those of the notch 163 of the engagement portion 160C of the compression side adjuster 160 is formed in the valve stopper 164, and the notch 165 of the valve stopper 164 is pressure inserted in such a manner as to be at the same position in the circumferential direction as the notch 163 of the adjuster.

The square rod-shaped engagement portion 134F of the adjust rod 134 is inserted into the compression side adjuster 160 and the notch 165 of the valve stopper 164. A flange portion 160D is formed in an outer periphery of the shaft portion 160A of the compression side adjuster 160, and a click mechanism 166 is provided between the flange portion 160D and the inner side surface of the cylinder side attaching member 100. Further, a polygonal hole 170 for engaging the tool is formed in an end surface in an outer side of the shaft portion 160A.

A pressure in the gas chamber D within the bladder 140 is adjusted by inserting a needle of an injection syringe into the through hole 161 of the shaft portion 160A of the compression side adjuster 160 so as to insert to the rubber valve body 162, thereby charging the air into the gas chamber D within the bladder 140 or discharging the air.

When rotating the compression side adjuster 160, the adjust rod 134 engaging with the notch 163 of the engagement portion 160C in the leading end side of the compression side adjuster 160 moves forward and backward while rotating within the guide member 153. The needle valve portion 134A in the leading end of the adjust rod 134 adjusts an opening area of the orifice hole 131 of the bypass oil path 125 in the partition member 120 provided in parallel to the oil path in the partition member 120.

In this case, the adjust rod 134 and the guide member 153 are previously assembled, as shown in FIG. 10A, whereby an adjust rod and guide member assembly 171 is provided, and the compression side adjuster 160 is previously assembled in the cylinder side attaching member 100, whereby a compression side adjuster assembly 177 is provided.

Next, a compression side adjuster and adjuster rod assembly 172 provided with the adjust rod 134 is assembled to the cylinder side attaching member 100 as shown in FIG. 9B, by screwing the thread portion 153F in the outer periphery of the cylinder portion of the expanded bed plate portion 154 of the guide member 153 with the thread portion 100B2 in the inner periphery of the cylinder portion 100B of the cylinder side attaching member 100, in a state of inserting the square rod-shaped engagement portion 134F of the adjust rod 134 of the adjust rod and guide member assembly 171 to the notches 163 and 165 of the engagement portion 165 of the compression side adjuster 160, as shown in FIG. 10B.

Next, the cylinder side attaching member 100 of the compression side adjuster and adjust rod assembly 172 is screwed with the inner periphery of the opening portion of the sub tank 27 by inserting the adjust rod 134 of the compression side adjuster and adjust rod assembly 172 into the hollow pipe 141, and fitting the expanded portion 153H in the leading end side inner periphery of the guide member 153 to the outer periphery of the base end portion 141C of the hollow pipe 141. A hexagonal hole 106D for engaging the tool at a time of screwing the cylinder side attaching member 100 with the inner periphery of the opening portion of the sub tank 27 is formed in the lower end surface of the cylinder side attaching member 100. The inner peripheral flange portion 142C of the bladder stopper 142 is brought into contact with the annular stopper portion 141D of the hollow pipe 141, whereby the bladder stopper 142 is fixed in the axial direction.

A bump rubber 180 is fixed to a lower end of the joint nut 30 by an adhesive agent, and bumps to the upper end surface of the damper cylinder 21 at the maximum compressing time of the front fork so as to achieve a buffering operation at the maximum compressing time.

A rebound spring 181 is interposed between the annular washer 42 mounted on the step portion in the inner periphery of the upper end portion of the cylinder main body 21A and the lock nut 46 in the outer periphery of the lower end portion of the rod main body 22A so as to achieve a buffering operation at the maximum extending time.

### (Relief Valve)

A cylindrical case 200 is provided in the outer periphery of the base end portion of the cylinder main body 21A, as shown in FIG. 6. The cylindrical case 200 is constituted by a small-diameter fitting portion 200A, a collar portion 200B in an inner periphery of the small-diameter fitting portion 200A, a large inner-diameter fitting portion 200C in a base end side, and a cylinder portion 200D in a leading end side having a larger inner diameter than the small-diameter fitting portion 200A. The small-diameter fitting portion 200A is fitted to the outer periphery of the base end portion of the cylinder main body 21A, the collar portion 200B is pinched between the cylinder main body 21A and the outer peripheral step portion in the outer periphery of the sub tank 27, and the large inner-diameter fitting portion 200C in the base end side is fitted to the outer periphery of the sub tank 27 via an O-ring.

An annular relief valve 201 is slidably provided between an inner periphery of the cylinder portion 200D in the leading end side and the cylinder main body 21A. A horizontal hole 202 is formed in a side wall of the cylinder main body 21A, and an outer side oil reservoir chamber R3 communicating with the oil reservoir chamber R1 in the lower portion of the partition wall member 120 within the damper cylinder 21 is provided within the cylinder portion 200D. An O-ring 202 fitted to an inner periphery of the annular relief valve 201 seals with respect to the outer periphery of the cylinder main body 21A, and an O-ring 203 fitted to an outer periphery of the annular relief valve 201 seals with respect to an inner periphery of the cylinder portion 200D of the cylindrical case 200. A taper surface 204 expanded to an outer side is formed in an inner periphery of a leading end portion of the cylinder portion 200D.

A relief spring 207 is interposed between a spring receiver 206 locked to the outer periphery of the cylinder main body 21A in the above of the annular relief valve 201 by a stopper ring 205 and the outer side surface of the relief valve 201, and the relief valve 201 pushes the outer oil reservoir chamber R3. The relief valve 201 is brought into contact with a step portion 300 formed in the outer periphery of the cylinder main body 21A so as to be stopped, at the maximum extending time of the damper unit 23. It is possible to adjust a valve opening pressure of the relief valve 201 by moving a locking position of the spring receiver of the relief valve 201 in an axial direction so as to change a preload of the relief spring 207, or changing the relief spring 207 to a relief spring 207 having a different spring rate.

The front fork 10 having the structure mentioned above is operated as follows.

### (Compression Stroke)

At the compressing time of the front fork 10, as shown in FIG. 1, one of the outer tube 11 or the inner tube 12 is relatively compressed with respect to the other, and the suspension spring 40 and the gas chamber B in the outer side of the damper unit 23 are compressed. The suspension spring 40 and the gas spring in the gas chamber B absorb an impact force which a vehicle receives from a road surface.

The damper unit 23 controls a compression speed of the front fork 10 on the basis of a compression side damping force generated by the piston 51 and the compression side damping force generating mechanism of the partition member 120.

### (Low Speed Time of Piston Speed)

When the hollow piston rod 22 moves into the damper cylinder 21, the piston side oil chamber C2 is contracted as shown in FIG. 5, and the working fluid in the piston side oil chamber C2 passes through the first bypass oil path 62 constituted by the small-diameter hollow hole 60A within the holder 50, the oil path between the hollow needle valve 65 and the first valve seat 63 and the horizontal hole 61 of the holder 50, and flows to the hollow piston rod side oil chamber C1. On the other hand, the working fluid at a entering volumetric capacity of the hollow piston rod 22 passes through the bypass oil path 125 of the partition member 120 provided in the piston side oil chamber C2 as shown in FIG. 6, flows to the oil reservoir chamber R1 under the partition member 120, further passes through a plurality of axial through holes 135 formed in the outer peripheral portion of the top portion 27A of the sub tank 27 and flows to the oil reservoir chamber R2 within the sub tank 27. The bladder 140 within the sub tank 27 is contracted so as to compensate the entering volumetric capacity of the hollow piston rod 22. When the piston speed reaches the valve opening pressure of the blow valve 80 interposed in the second bypass oil path 71 within the hollow piston rod 22, the blow valve 80 is opened, and the working fluid in the piston side oil chamber C2 flows to the hollow piston rod side oil chamber C1 through the hollow small-diameter hole 60A of the hollow piston rod 22, the second bypass oil path 71 within the hollow needle valve constituted by the small-diameter hole 72B in the axial direction within the hollow needle valve 65, the large-diameter hole 72A and the horizontal hole 74 in the hollow needle valve 65, and the horizontal hole 61 in the hollow piston rod 22.

The compression side damping force is generated on the basis of a flow resistance generated at a time when the working fluid passes through the bypass oil path 125 of the partition member 120, a flow resistance generated at a time of passing through the first bypass oil path 62 of the piston 51, and a flow resistance generated at a time of passing through the second bypass oil path 71 of the piston 51. The blow valve 80 generates a damping force having an orifice property by the needle valve until reaching a given compression speed, as shown in FIG. 18C, and when the blow valve 80 reaches the given compression speed, the blow valve 80 is opened so as to generate a compression side damping force having a valve property.

### (Middle and High Speed Times of Piston Speed)

When the piston speed is middle or high, the blow valve 80 within the hollow needle valve 65 is completely opened, and the working fluid in the piston side oil chamber C2 bends the compression side valve 54 of the compression side oil path 52 in the piston 51 so as to flow to the hollow piston side oil chamber C1. On the other hand, the working fluid at the entering volumetric capacity of the hollow piston rod 22 bends the compression side valve 123 of the compression side oil path 121 of the partition member 120, flows to the oil reservoir chamber R1 under the partition member 120, further passes through a plurality of axial through holes 135 formed in the outer peripheral portion of the top portion 27A of the sub tank 27, and flows to the oil reservoir chamber R2 within the sub tank 27. The compression side damping force is generated on the basis of a flow resistance of the working fluid at a time of passing through the compression side valve 123 of the compression side oil path 121 of the partition member 120. Further, the compression side damping force is also generated in the compression side valve 54 of the compression side oil path 52 of the piston 51.

### (Extension Stroke)

At the extending time of the front fork 10, one of the outer tube 11 or the inner tube 12 is relatively extended with respect to the other, and the suspension spring 40 is extended and the gas chamber B in the outer side of the damper unit 23 is enlarged.

The damper unit 23 controls a resonance of the suspension spring 40 on the basis of an extension side damping force generated by the extension side damping force of the piston 51.

### (Low Speed Time of Piston Speed)

When the hollow piston rod 22 moves out of the damper cylinder 21, the hollow piston rod side oil chamber C1 is contracted, and the working fluid in the hollow piston rod side oil chamber C1 passes through the first bypass oil path 62 constituted by the horizontal hole 61 of the hollow piston rod 22, the oil path between the outer periphery of the hollow needle valve 65 and the first valve seat 63, and the small inner-diameter hollow hole 60A, and flows to the piston side oil chamber C2, as shown in FIG. 5. The pressure in the hollow piston rod side oil chamber C1 is applied to the oil chamber S3 at the back of the blow valve 80 via the pressure introduction hole 83 of the blow valve 80 so as to close the second bypass oil path 71 within the hollow needle valve 65. On the other hand, when the piston side oil chamber C2 is expanded, the bladder 140 within the sub tank 27 is restored from the contracted state, and the working fluid at an amount corresponding to a retracting volumetric capacity of the hollow piston rod 22 opens the extension side check valve 124 provided in the extension side oil path 122 of the partition member 120 so as to compensate the pressure reduction of the piston side oil chamber C2.

### (Middle and High Speed Times of Piston Speed)

When the piston speed reaches a given speed, the extension side valve 57 of the extension side oil path 55 of the piston 51 is opened so as to generate an extension side damping force.

### (Operation of Relief Valve)

Since the oil seal 44 provided between the rod guide 41 and the hollow piston rod 22 is provided in one direction scraping off the working fluid within the damper cylinder 21, the working fluid outside the damper cylinder 21 attached to the surface of the hollow piston rod 22 makes an intrusion into the damper cylinder 21 with time. When the working fluid is accumulated within the damper cylinder 21, the pressure within the damper cylinder 21 is increased. When the pressure in the damper cylinder 21 reaches the valve opening pressure of the annular relief valve 201 provided within the cylindrical case 200 in the outer periphery of the damper cylinder 21, the relief valve 201 bends the relief spring 207 so as to move upward, and when the O-ring fitted to the outer periphery of the relief valve 201 reaches the taper surface of the cylinder portion 200D of the cylindrical case 200, the relief valve 201 relieves the working fluid in the oil chamber C within the damper cylinder 21 to the oil chamber A outside the damper cylinder 21, and keeps the pressure in the damper cylinder 21 constant.

In accordance with the present embodiment, the following operations and effects can be achieved.
(a) Since the bladder 140 is provided in the inner side of the damper cylinder 21 and the gas chamber D is sealed between the inner periphery of the bladder 140 and the lid portion 100A in the end portion of the damper cylinder 21, the lid portion 100A can be provided with the valve body 162 for adjusting the pressure in the gas chamber D. As a result, it is possible to adjust the pressure in the gas chamber D independently from the gas chamber B of the reservoir chamber outside the damper cylinder 21. Further, since the valve opening pressure adjusting means 207 of the relief valve 201 is provided, it is possible to adjust the valve opening pressure of the relief valve 201 so as to change the valve opening time of the relief valve 201 even if the valve opening time of the relief valve 201 is changed after adjusting the pressure in the gas chamber D.
(b) Since the damper cylinder 21 is attached to the wheel side tube 12, the piston rod 22 is attached to the vehicle body side tube 11, and the damper unit 23 is arranged in an erected manner, the relief valve 201 can be provided so as to be immersed into the oil chamber A in the outer side of the damper unit 23. As a result, the surplus working fluid within the damper cylinder 21 is directly discharged to the oil chamber A in the outer side of the damper unit 23, and does not come down to the oil chamber outside the damper cylinder 21 in the lower portion through the gas chamber D in the outer side of the upper damper cylinder 21, as is different from the front fork in accordance with the prior art in which the damper cylinder 21 is arranged inversely. Accordingly, the air is hard to be mixed in the working fluid.
(c) It is possible to adjust the pressure by charging the air into the gas chamber D via the valve body 162 or discharging.
(d) It is possible to adjust the relief pressure of the relief valve 201 by changing a preload of the relief spring 207 and changing the relief spring 207 having a different spring preload and spring rate.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above, but should be understood to include all possible embodiments which can be encompassed within a scope of equivalents thereof with respect to the features set out in the appended claims.

## Claims

1. A front fork (10) of a motorcycle or the like comprising:
a vehicle body side tube (11) and a wheel side tube (12) which are slidably fitted;
a damper unit (23) constituted by a damper cylinder (21) attached to the wheel side tube (12) and a piston rod (22) attached to the vehicle body side tube (11);
an oil chamber (C) within the damper cylinder (21), an oil chamber (A) in an outer side of the damper unit (23) and a gas chamber (B) in an upper portion of the outer side oil chamber (A);
an oil seal (44) provided in a direction of scraping off an oil within the damper cylinder (21) between the damper cylinder (21) and the piston rod (22);
a gas chamber (D) sealed between an inner periphery of a bladder (140) provided within the damper cylinder (21) and a lid portion (100A) of the damper cylinder (21);
a valve body for adjusting a pressure in the gas chamber (D) within the bladder (140);
an annular relief valve (201) slidably provided between a cylindrical case (200) arranged in an outer periphery of the damper cylinder (21) and the damper cylinder (21);
an oil reservoir chamber (R3) in an outer side of the damper unit (23) provided between an inner periphery of the cylindrical case (200) and the annular relief valve (201), and communicating with an oil chamber (R1) within the damper cylinder (21); and
a valve opening pressure adjusting means of the annular relief valve (201).

2. A front fork (10) of a motorcycle or the like as claimed in claim 1, wherein the valve body for adjusting the pressure in the gas chamber is constituted by a rubber valve body (162).

3. A front fork of a motorcycle or the like as claimed in claim 1 or 2, wherein the valve opening pressure adjusting means of the annular relief valve (201) is constituted by a relief spring (207) pushing the annular relief valve (201).

4. A front fork (10) of a motorcycle or the like as claimed in claim 1, wherein the damper cylinder (21) is constituted by a cylinder main body (21A) and a sub tank (27) screwed with an inner periphery of a lower end portion of the cylinder main body (21A), and
wherein the bladder (140) is assembled within the sub tank (27).

5. A front fork (10) of a motorcycle or the like as claimed in claim 4, wherein the cylindrical case (200) comprises:
a small-diameter fitting portion (200A) fitted to an outer periphery of a base end portion of the cylinder main body (21A);
a collar portion (200B) pinched between the cylinder main body (21A) and the sub tank (27) subsequently to the small-diameter fitting portion (200A);
a large inner-diameter fitting portion (200C) fitted to an outer periphery of the sub tank (27) subsequently to the collar portion (200B); and
a leading end side cylinder portion (200D) having a larger inner diameter than the small-diameter fitting portion (200A) subsequently to an opposite collar portion (200B) side in the small-diameter fitting portion (200A), and
wherein the annular relief valve (201) is slidably provided between an inner periphery of the leading end side cylinder portion (200D) of the cylindrical case (200), and the cylinder main body (21A).

6. A front fork (10) of a motorcycle or the like as claimed in claim 4, wherein a spring (207) serving as the valve opening pressure adjusting means of the annular relief valve (201) is interposed between a spring receiver (206) locked to an outer periphery of the cylinder main body (21A) in the damper cylinder (21) above the annular relief valve (201), and an outer peripheral surface of the relief valve (201).
